# EUROPEAN PATENT SPECIFICATION

(11) **EP 2 401 643 B1**
(45) Date of publication and mention of the grant of the patent: **16.05.2018**
(21) Application number: 10707153.2
(22) Date of filing: 22.02.2010
(51) Int. Cl.: G02B 6/38, G02B 6/44

(54) **HINGED FIBER OPTIC MODULE HOUSING AND MODULE**
ANGELENKTES GEHÄUSE FÜR EIN FASEROPTISCHES MODUL UND MODUL
BOÎTIER DE MODULE À FIBRES OPTIQUES ARTICULÉ ET MODULE

(30) Priority: 27.02.2009 US 394114
(43) Date of publication of application: 04.01.2012
(73) Proprietor: Corning Optical Communications LLC, Hickory, NC 28601 (US)
(72) Inventor: COOKE, Terry L., Hickory North Carolina 28601 (US); DEAN, JR., David L., Hickory North Carolina 28601 (US); KLAVUHN, Tory A., Newton North Carolina 28658 (US); MABRY III, Clyde B., Salisbury North Carolina 28146 (US)
(74) Representative: Sturm, Christoph
(86) International application number: PCT/US2010/024888
(87) International publication number: WO 2010/099059

(56) References cited:
- EP-A1- 1 777 563
- WO-A2-2009/091465
- WO-A2-2009/120280
- US-A- 5 708 742
- US-A1- 2002 150 372
- US-A1- 2006 193 590
- US-A1- 2010 142 910
- Anonymous: "Living hinge - Wikipedia, the free encyclopedia", , 19 March 2015 (2015-03-19), XP055177886, Retrieved from the Internet: URL:http://en.wikipedia.org/wiki/Living_hi nge [retrieved on 2015-03-19]

## Description

### BACKGROUND

### Field of the Disclosure

The technology of the disclosure relates to fiber optic module housings and modules that support fiber optic connections.

### Technical Background

Benefits of optical fiber use include extremely wide bandwidth and low noise operation. Because of these advantages, optical fiber is increasingly being used for a variety of applications, including but not limited to broadband voice, video, and data transmissions. Fiber optic networks employing optical fibers are being developed and used to deliver voice, video, and data transmissions to subscribers over both private and public networks. These fiber optic networks often include separated connection points at which it is necessary to link optical fibers in order to provide "live fiber" from one connection point to another connection point. In this regard, fiber optic equipment is located in data distribution centers or central offices to support interconnections.

Fiber optic components provided in a fiber optic module may be difficult to access when establishing and modifying connections as well as when cleaning due to limited finger access. The fiber optic components may be removed from the fiber optic module to gain sufficient access and then re-installed. For example, the fiber optic components may be removed for cleaning during loss insertion testing. However after cleaning, the operator may not fully establish a fiber optic connection to a particular fiber optic component. Even so, the fiber optic module may still pass the loss insertion testing. However, subsequently during transport or operation, the fiber optic connection to a fiber optic component may become disconnected. As a result, a customer service call or report may be generated reporting a perceived broken optical fiber or fiber optic component for a fiber optic module that does not actually exist.

Thus, a need exists to provide a fiber optic module that allows for easy accessibility of components, including but not limited to connectors and adapters, to avoid or reduce the possibility of partially latching of components, including fiber optic connectors into fiber optic adapters, when installing and re-installing connections.

US 5 708 742 A discloses a fiber optic module housing according to the preamble of claim 1.

US 2006/0193590 A1, EP 1 777 563 A1, WO 2009/120280 A2 discloses other fiber optic module housings according to the prior art.

### SUMMARY OF THE DETAILED DESCRIPTION

The invention provides a fiber optic module housings and module according to claim 1.

Additional features and advantages of the invention will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operation of the invention.

### BRIEF DESCRIPTION OF THE FIGURES

**FIG.** 1 is a comparative fiber optic module illustrating fiber optic connections inside a fiber optic module housing;
**FIG. 2** is a comparative one-piece fiber optic module housing incorporating a living hinge between an opened front panel and a main body of the fiber optic module housing;
**FIG. 3** is the fiber optic module housing of **FIG. 2** with the front panel closed to the main body of the fiber optic module housing;
**FIG. 4** is the fiber optic module housing of **FIG. 3** with a side cover installed on the main body to seal off an internal chamber of the fiber optic module housing;
**FIG. 5** is a comparative fiber optic module incorporating a hinge between an opened front panel and a main body of the fiber optic module housing, wherein the hinge is a separate part from the front panel and fiber optic module housing;
**FIG. 6** is the fiber optic module housing of **FIG. 5** with the front panel closed to the main body of the fiber optic module housing;
**FIG. 7** is a fiber optic module according to the invention incorporating a living hinge between an opened rear panel and a main body of a fiber optic module housing;
**FIG. 8** is the fiber optic module of **FIG. 7** with the rear panel closed to the main body of the fiber optic module housing;
**FIG. 9** is a comparative exemplary unassembled fiber optic module housing incorporating living hinges between joint interfaces of the fiber optic module housing; and
**FIG. 10** is the fiber optic module housing of **FIG. 9** assembled.

### DETAILED DESCRIPTION OF THE PREFERRED EMBODIMENTS

Reference will now be made in detail to the preferred embodiments of the present invention, examples of which are illustrated in the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

Embodiments disclosed in the detailed description include fiber optic module housings and modules. The fiber optic module housing comprises at least one hinge disposed between a portion of a main body and a panel configured to support one or more fiber optic components. The panel can be opened from and closed against or substantially against the main body about the hinge. In this manner, the panel can be opened from the main body to provide enhanced access to the panel, fiber optic components disposed in the panel, and/or the internal chamber of the fiber optic module housing. In certain embodiments, the hinge is a living hinge made from a material joining the panel and a portion of the main body that allows the panel to bend along the living hinge with respect to the main body. The panel and main body may be constructed out of one part with the living hinge disposed in the part therebetween to provide a hinge between the panel and main body. In other embodiments, the hinge is a separate part disposed between and attached to the panel at a portion of the main body.

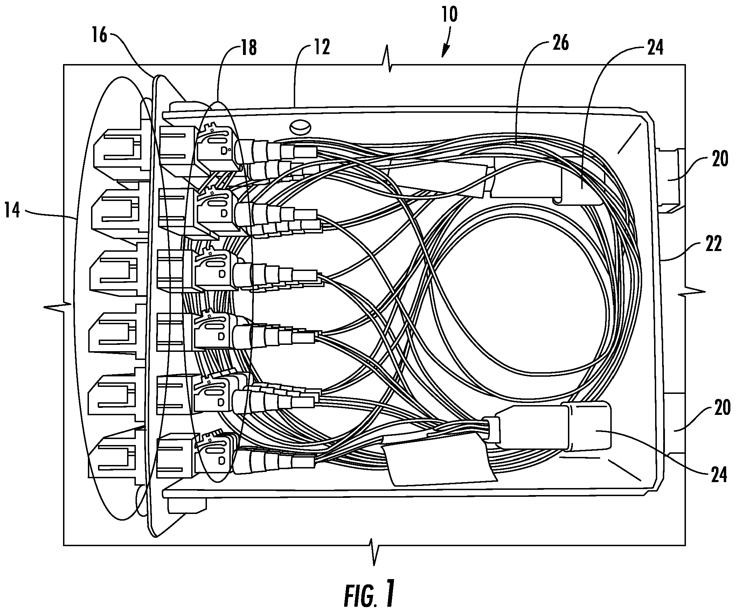

**FIG. 1** illustrates an example of what may be termed a high density fiber optic module **10**. The side cover of the fiber optic module **10** is removed so that the fiber optic components and cables contained therein can be seen. As illustrated therein, the fiber optic module **10** is comprised of a housing **12** containing twelve (12) duplex LC fiber optic adapters **14** on a front side **16** of the fiber optic module **10** for supporting up to twelve (12) duplex LC fiber optic connectors **18**. The housing **12** also contains two, twelve (12) fiber MTP adapters **20** on a rear side **22** of the fiber optic module **10** to support two (2) MTP fiber optic connectors **24**, each supporting twelve (12) optical fibers. A cable harness **26** containing the fiber optic connectors **18**, **24** on each end are plugged into fiber optic adapters **14**, **20** to establish fiber optic connections between the fiber optic adapters **14, 20**. In this manner, when fiber optic cables (not shown) external to the fiber optic module **10** are plugged into the fiber optic adapters **14, 20**, optical connections are established between the fiber optic cables.

As can be seen in the fiber optic module **10**, the fiber optic adapters **14, 20**, and fiber optic connectors **18, 24** are fitted tightly inside the housing **12**. Finger access between the fiber optic adapters **14, 20**, and fiber optic connectors **18, 24** is limited and thus may be difficult to access when establishing and modifying connections and as well as when cleaning. As a result, the fiber optic adapters **14, 20,** and/or the fiber optic connectors **18, 24** may be removed from the fiber optic module **10** to gain sufficient access and then re-installed. For example, the fiber optic connectors **18, 24** latched into the fiber optic adapters **14, 20** may be removed for cleaning during loss insertion testing. After cleaning, the operator may not fully latch a particular fiber optic connector **18, 24** back into a respective fiber optic adapter **14, 20**. Even so, the fiber optic module **10** may still pass the loss insertion testing. However, subsequently during transport or operation, the partially latched fiber optic connector **18, 24** may vibrate or otherwise fall out of the fiber optic adapter **14, 20**. As a result, a customer service call or report may be generated reporting a perceived broken optical fiber or component for a fiber optic module that does not actually exist.

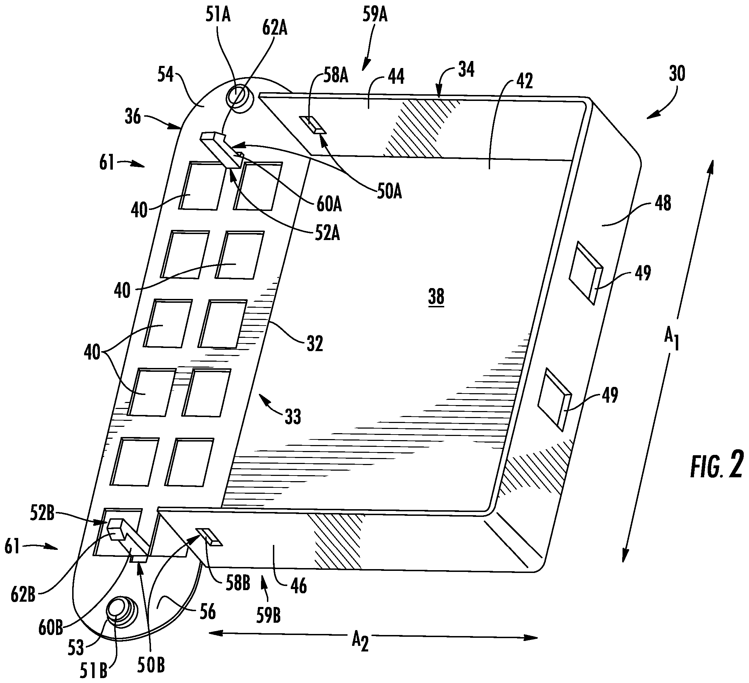

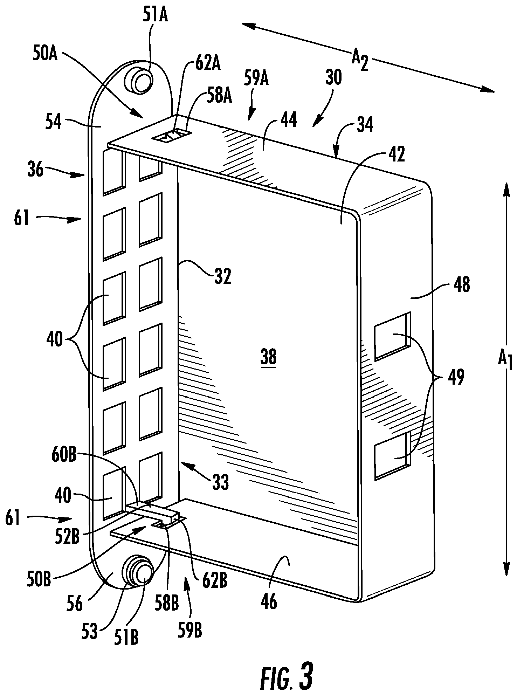

In this regard, **FIGS. 2-4** illustrate a comparative embodiment of a fiber optic module housing **30** that incorporates a hinge to provide improved accessibility. The fiber optic module housing **30** is configured to support fiber optic adapters and connectors (not shown) to support fiber optic connections as part of a fiber optic module. In this regard, **FIG. 2** illustrates a side perspective view of the fiber optic module housing **30** incorporating a hinge **32**. The fiber optic module housing **30** is shown with its longitudinal axis **A₁** aligned in a vertical or y-axis orientation and its latitudinal axis **A₂** oriented in the horizontal or x-axis orientation. However, the fiber optic module housing **30** could be oriented such that its latitudinal axis **A₂** is aligned in a vertical or y-axis orientation and its longitudinal axis **A₁** aligned in a horizontal or x-axis orientation. Any other orientation is possible. The hinge **32** is disposed between a portion **33** of the main body **34** and a front panel **36**. In this manner, the front panel **36** can rotate about the hinge **32** to open (as illustrated in **FIG. 2**) and close against or substantially against the main body **34** (as illustrated in **FIG. 3**). The ability to open the front panel **36** from the main body **34** allows enhanced accessibility into an internal chamber **38** inside the main body **34**. The front panel **36** can also be opened about the hinge **32** to access any fiber optic components (not shown) disposed in the internal chamber **38**. Examples of fiber optic components that can be supported and accessed in the internal chamber **38** include, but are not limited to, fiber optic adapters, connectors, and cable harnesses.

Because the front panel **36** is hingedly attached to the main body **34**, the front panel **36** can also be opened from the main body **34** to access fiber optic components disposed in the fiber optic component openings **40** in the front panel **36**. For example, fiber optic adapters (not shown) may be disposed in the fiber optic component openings **40**, wherein a cable harness having fiber optic connectors and contained in the internal chamber **38** of the fiber optic module housing **20**, is connected to the fiber optic adapters. The ability to open the front panel **36** changes the orientation of the front panel **36** and any fiber optic components disposed in the fiber optic component openings **40** of the front panel **36**. In this manner, access to the fiber optic components is more convenient and does not require accessing the internal chamber **38** where a high density of fiber optic components may be provided thereby limiting access. For example, this enhanced access may be useful when cleaning fiber optic connectors disposed or attached to fiber optic components disposed in the fiber optic component openings **40**.

Further, the hinge **32** is a living hinge. A living hinge is a flexible and generally thin hinge or flexure bearing typically made from plastic that joins two rigid plastic parts together allowing them to bend along the line of the hinge. The two rigid parts joined together by the hinge **32** are the front panel **36** and a base side **42** of the main body **34**. The hinge **32** is formed from a thinned section (i.e., thinner than the thickness of the main body **34** and front panel **36**) of a plastic bend to allow movement or flexing. The minimal friction and light wear in the hinge **32** makes it useful to provide as a hinge between two parts. Further, a living hinge may be a low cost to manufacture. The main body **34,** the front panel **36,** and the hinge **32** disposed therebetween can be made out of a Polypropylene resin. However a Polyethylene resin is also another suitable material choice. Any other material(s) may be used to form the front panel **36,** the main body **34,** and the hinge **32** disposed therebetween depending on the desired fatigue resistance of the hinge **32**. Other examples include Valox and nylon. The fatigue resistance determines the functional life of the hinge **32,** meaning the ability to resist fatigue after a given number of openings and closings.

The hinge **32** in **FIG. 2** can be formed from an injection molding or extrusion process that creates the main body **34,** the front panel **36,** and the hinge **32** as a single part. The main body **34** is comprised of the base side **42,** top and bottom sides **44, 46,** and a rear panel **48,** which can also be formed from an injection molding or extrusion process as part of the single part along with the front panel **36** and the hinge **32**. The top and bottom sides **44, 46,** and the rear panel **48** are each arranged orthogonally or substantially orthogonally to the base side **42** during the molding process to form the internal chamber **38**. The rear panel **48** also contains one or more fiber optic component openings **49** configured to support one or more fiber optic components for establishing fiber optic connections to fiber optic components disposed in the fiber optic component openings **40** disposed in the front panel **36**.

In this comparative embodiment, as illustrated in **FIG. 2****,** the front panel **36** includes mounting orifices **51A, 51B** that are configured to receive fasteners (not shown) for attaching the fiber optic module housing **30** to a chassis. Also, a grommet **53** may be disposed inside one or both of the mounting orifices **51A, 51B** and configured to receive fasteners to secure the fiber optic module housing **30** to a chassis. Only one grommet **53** is illustrated as being disposed in a mounting orifice in **FIGS. 2-4** (i.e., mounting orifice **51B**); however, a grommet may also be disposed in mounting orifice **51A** as well. Also locking mechanisms **50A, 50B** are provided, as illustrated in **FIG. 2****,** to allow the front panel **36** to be locked or secured to the main body **34** when closed. This prevents the front panel **36** from swinging open unintendedly during manufacture, shipment, and/or during and after installation and so that any fiber optic components installed in the internal chamber **38** are protected, such as from dust and other debris. The locking mechanisms **50A, 50B** are provided in the form of latches **52A, 52B** disposed in the front panel **36**. Two latches **52A, 52B** are disposed on the front panel 3**6**: one latch **52A** at a top section **54** of the front panel **36**, and one latch **52B** at a bottom section **56** of the front panel **36**. However, any number of latches can be provided. Each latch **52A, 52B** is configured to be received into a corresponding latch receiver **58A, 58B** disposed on portions **59A, 59B** on the top side **44** and bottom side **46**, respectively, of the main body **34**. The latches **52A, 52B** are biased towards the main body **34**. When the front panel **36** is closed against or substantially against the main body **34**, latch fingers **60A, 60B** move into the internal chamber **38** adjacent the top side **44** and bottom side **46**, respectively, wherein latch ends **62A, 62B** disposed on the ends of the latch fingers **60A, 60B** move inside and engage into their respective latch receivers **58A, 58B.** This is illustrated in **FIG. 3**. Because the latch ends **62A, 62B** are biased toward the main body **34**, the latch ends **62A, 62B** remain secured inside the latch receivers **58A, 58B** until released.

To open the front panel **36** after being latched, the latch fingers **60A, 60B** are released from the latch receivers **58A, 58B** by pushing in the latch fingers **60A, 60B** disposed in the latch receivers **58A, 58B** in the internal chamber **38**. This action moves the latch ends **62A, 62B** outside of the latch receivers **58A, 58B** such that they are released. The front panel **36** will then be free to be opened about the hinge **32** from the main body **34** for access, as illustrated in **FIG. 2**. After access, the front panel **36** can then again be closed or substantially closed against the main body **34** and secured to the main body **34** via the locking mechanisms **50A, 50B,** as illustrated in **FIG. 3**. Note that a reverse latching system could also be employed wherein latch receivers are disposed in the front panel **36** and the latches are disposed in a portion **61** of the main body **34**. In this alternative, the latches would remain fixed on the main body **34** while the latch receivers move along with the movement of the front panel **36** about the hinge **32**.

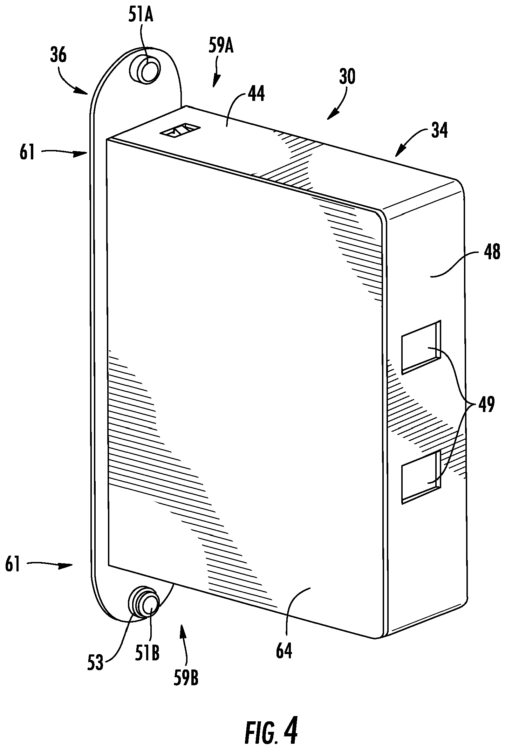

In **FIGS. 2** **and** **3****,** the internal chamber **38** of the fiber optic module housing **30** was exposed so that the internal features of the fiber optic module housing **30** could be illustrated and discussed. However, after the fiber optic module housing **30** is constructed and fiber optic components are installed in the internal chamber **38** and disposed through the front panel **36** and rear panel **48**, a side cover **64** is installed on the main body **34**, as illustrated in **FIG. 4**. The side cover **64** closes off the main body **34** and the internal chamber **38** to provide structural integrity to the main body **34** and to protect fiber optic components disposed in the internal chamber **38**. Although the side cover **64** is a separate part from the main body **34**, the side cover **64** becomes part of the fiber optic module housing **30** when installed. Any form of securing or attachment of the side cover **64** to the main body **34** can be employed, including but not limited to latches, including latches similar to the locking mechanisms **50A, 50B** previously described, a groove and tongue arrangement, and an indention and protrusion arrangement as examples. Further, an adhesive or epoxy may be placed between the side cover **64** and the main body **34** to secure the two together, if desired, although such may not be necessary if the fiber optic module housing **30** does not require sealing, such as when provided in an indoor environment as an example.

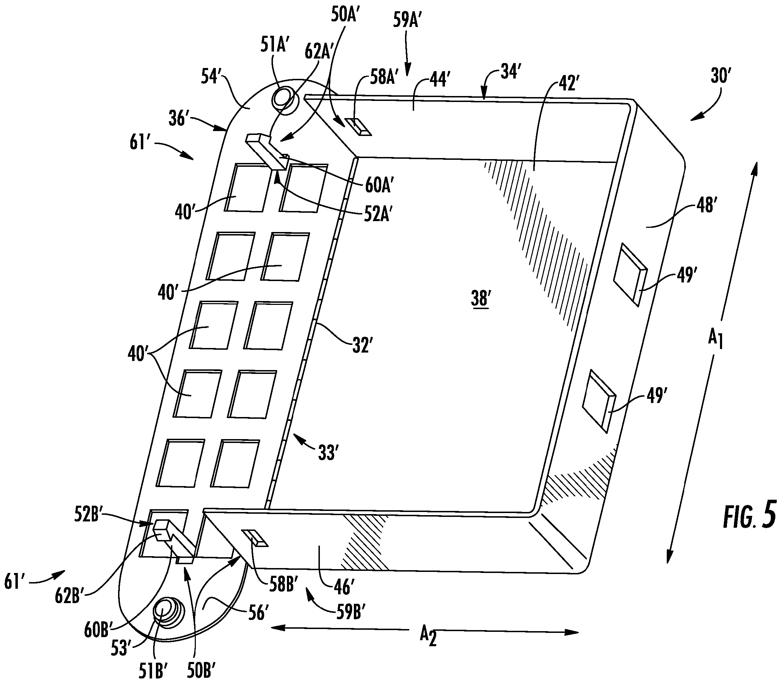

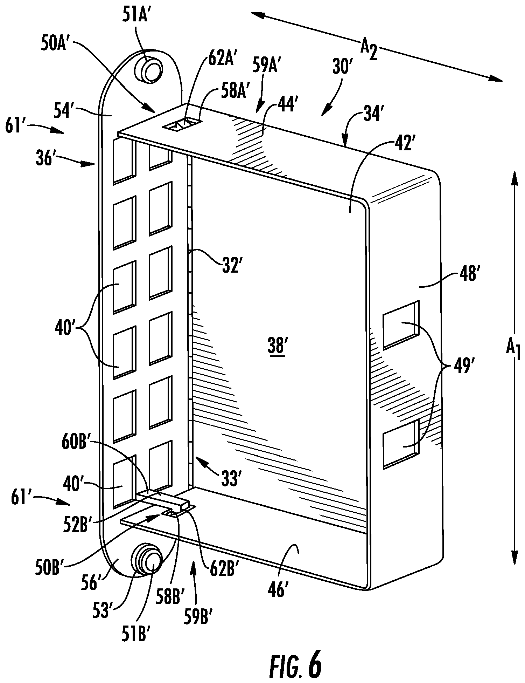

**FIGS. 5** **and** **6** illustrate an alternate fiber optic module housing **30'** to the fiber optic module housing **30** of **FIGS. 2-4****.** The fiber optic module housing **30'** is of similar construction and parts as the fiber optic module housing **30** in **FIGS. 2-4****,** and thus similar parts are indicated by the same element number with the appendage of an apostrophe mark ('). However, in the fiber optic module housing **30'** in **FIGS. 5** **and** **6****,** the hinge **32'** is not a living hinge. Instead, the hinge **32'** is a separate part that is installed between a front panel **36'** and a main body **34'** in the fiber optic module housing **30'**. Thus, the front panel **36'** is not provided as part of a single part along with the main body **34'**. The hinge **32'** may be any type of hinge desired. Examples include a door hinge, a butt hinge, a continuous hinge, a concealed hinge, a tee hinge, a butterfly hinge, a barrel hinge, a strap hinge, and a friction hinge, as examples, just to name a few. The remaining elements and their functions in the fiber optic module housing **30'** of **FIGS. 5** **and** **6** have the same or essentially the same function as their counterparts in the fiber optic module housing **30** of **FIGS. 2-4**. The previous discussion of these elements and their functions are equally applicable for the fiber optic module housing **30'** of **FIGS. 5** **and** **6** and thus will not be repeated here again.

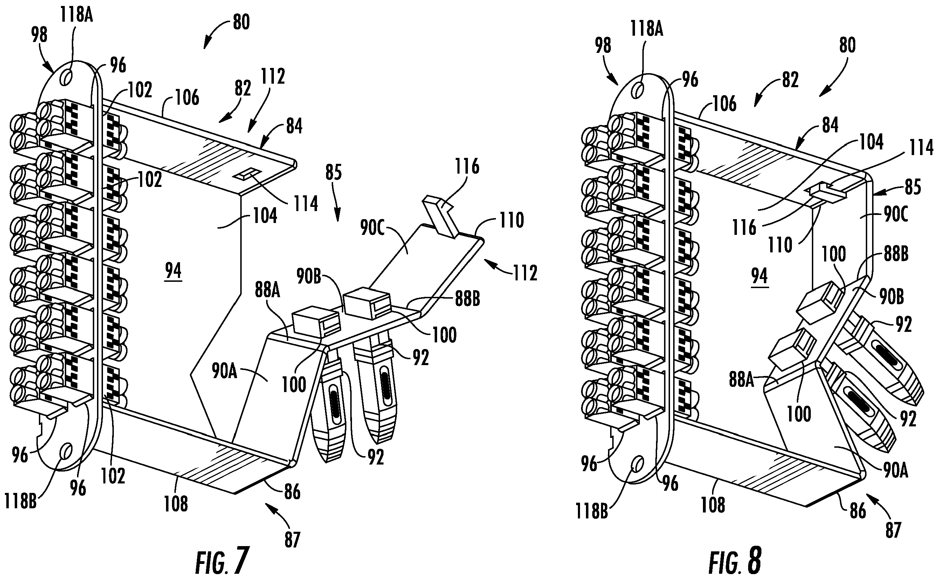

**FIGS. 7 and 8** illustrate an embodiment of a fiber optic module **80** and fiber optic module housing **82** that may be employed. In this embodiment, a rear panel **85** of the fiber optic module housing **82** is hingedly attached to a main body **84.** This is opposed to a front panel being hingedly attached to a main body, as provided in comparative embodiments illustrated in **FIGS. 2-6**. Like provided for the front panel **36** in the fiber optic module housing **30** in **FIGS. 2-4**, the rear panel **85** in **FIGS. 7 and 8** is hingedly attached to the main body **84** via a living hinge **86** disposed between the rear panel **85** and a portion **87** of a main body **84** to provide improved accessibility. The same attributes and discussion regarding the living hinge provided above with respect to the fiber optic module housing **30** in **FIGS. 2-4** is equally applicable for the living hinge **86** here and thus will not be repeated.

However, in this embodiment, a number of living panel hinges **88A, 88B** are also disposed in the rear panel **85** that allow panel sections **90A-90C** of the rear panel **85** to bend with respect to each other about the living panel hinges **88A, 88B**. Providing panel hinges between panel sections of a fiber optic module housing panel may be useful for accessibility of fiber optic components, such as fiber optic adapters **92** disposed through fiber optic component openings **100** in the rear panel **85** as illustrated in **FIGS. 7 and 8**, if a panel is not substantially planar. In this embodiment, because the rear panel **85** is not comprised of coplanar surfaces, access to fiber optic components, such as the fiber optic adapters **92**, disposed in the rear panel **85** may still be difficult even when the rear panel **85** is opened from the main body **84** about the living hinge **86**. The inclusion of living panel hinges **88A, 88B** provides more flexibility in accessing fiber optic components disposed in the rear panel **85**. Note that in this embodiment, three (3) panel sections **90A-90C** are provided; however, only one (1) or any number of panel sections **90** may be provided.

Turning back to **FIGS. 7 and 8**, the rear panel **85** can rotate about the living hinge **86** to open (as illustrated in **FIG. 7**) and close against or substantially against the main body **84** (as illustrated in **FIG. 8**) to allow accessibility into an internal chamber **94** inside the main body **84**. The rear panel **85** can also be opened about the living hinge **86** to access any fiber optic components (not shown) disposed in the internal chamber **94**. Examples of fiber optic components that can be supported in the internal chamber **94** include, but are not limited to, fiber optic adapters, connectors, and cable harnesses. These fiber optic components are used to establish fiber optic connections between fiber optic components (not shown) disposed in fiber optic component openings **96** in a front panel **98** and the fiber optic components disposed in the fiber optic component openings **100** in the rear panel **85**.

Because the rear panel **85** is hingedly attached to the main body **84**, the rear panel **85** can be opened from the main body **84** to access any fiber optic components (not shown) disposed in the internal chamber **94**, for example, the fiber optic adapters **92** disposed in the fiber optic component openings **100**. As another example, the rear panel **85** can be opened to access a cable harness (not shown) having fiber optic connectors connected to the fiber optic adapters **92**. The cable harness may connect the fiber optic adapters **92** to fiber optic adapters **102** disposed in the fiber optic component openings **96** in the front panel **98**.

In the fiber optic module housing **82** of **FIGS. 7 and 8**, the living hinge **86** is formed from an injection molding operation that creates the main body **84**, the rear panel **85**, and the living hinge **86** at one time as a single part. In this embodiment, the main body **84** is comprised of a base side **104**, top and bottom sides **106**, **108**, and the rear panel **85**, which are also formed from the injection molding operation as part of the single part with the rear panel **85** and the living hinge **86**. The top and bottom sides **106**, **108**, and the rear panel **85** are each arranged orthogonally or substantially orthogonally to the base side **104** during the molding process to form the internal chamber **94**. Also as part of the single part, the two living panel hinges **88A, 88B** are also formed in the rear panel **85** to form the individual panel sections **90A-90C**. Thus, when the fiber optic module housing **82** is assembled, the rear panel **85** can bend about the living hinge **86**, and the panel sections **90A-90C** can bend about the living panel hinges **88A, 88B**.

To attach or close the rear panel **85** against or substantially against the main body **84**, a top section **110** of the panel section **90C** is secured to the top side **106** of the main body **84**. In this embodiment, a locking mechanism **112** is provided in the form of a latch receiver **114** disposed in the top side **106** and configured to receive a latch **116** similar to the latch and latch receivers **58, 60** in **FIGS. 2-4**. Any other type of securing or locking mechanism or system may be employed, including but not limited to a latching system like that provided for the fiber optic module housings **30, 30'** in **FIGS. 2-6****.** To open the rear panel **85** after being secured to the main body **84**, the rear panel **85** is unsecured or unlocked from the top side **106**. The fiber optic module housing **82** can be installed if desired, into a fiber optic equipment housing, such as a chassis. The front panel **98** includes mounting orifices **118A, 118B** that are configured to receive fasteners (not shown) for attaching the fiber optic module housing **82** to a chassis. Also, grommets (not shown) could be disposed in either or both of the mounting orifices **118A, 118B** and configured to receive fasteners (not shown) to secure the fiber optic module housing **82** to a chassis.

Also in the illustrations of **FIGS. 7 and 8****,** the internal chamber **94** of the fiber optic module **80** was exposed so that the internal features of the fiber optic module housing **82** could be illustrated and discussed. However, after the fiber optic module housing **82** is constructed and fiber optic components are installed in the internal chamber **94** and disposed through the front panel **98** and rear panel **85**, a side cover (not shown) is installed on the main body **84**, like that of the side cover **64** in **FIG. 4** as an example.

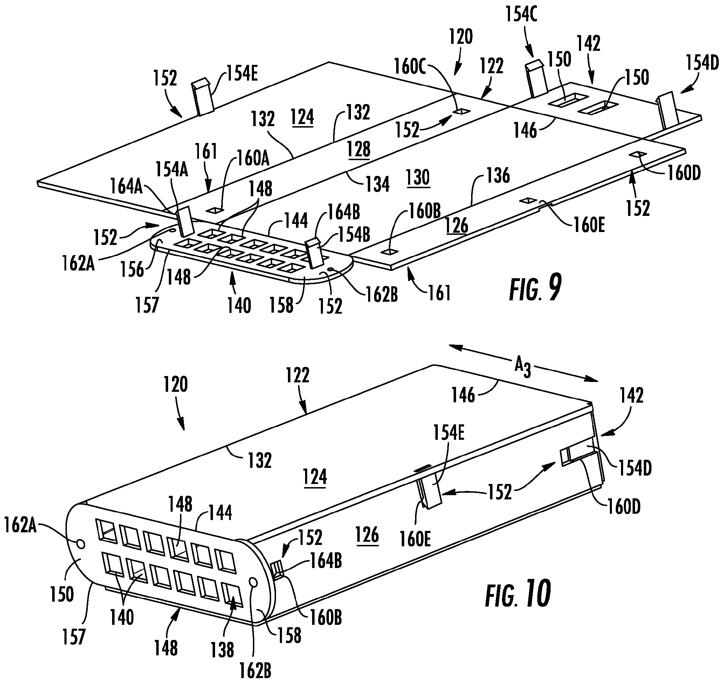

In another comparative embodiment, a fiber optic module housing is provided that is comprised of a single part that is foldable for assembly employing the use of living hinges. An example of such a fiber optic housing module **120** is illustrated in **FIGS. 9 and 10****.** The fiber optic module housing **120** can be folded along certain sides during assembly to form an assembled housing used to provide a fiber optic module. **FIG. 9** illustrates the fiber optic module housing **120** before being folded for assembly. As illustrated therein, the fiber optic module housing **120** is comprised of a main body **122** comprised of a first end section **124** and a second end section **126**. Intermediate sections **128, 130** are disposed between the first end section **124** and the second end section **126**. Living hinges **132, 134, 136** are disposed between each of the first end section **124** and the intermediate section **128**, the intermediate section **128** and the intermediate section **130**, and the intermediate section **130** and the second end section **126**, respectively. In this manner, each of the section ends **124, 126** and the intermediate section **128** can fold about the intermediate section **130** and onto each other to form the main body **122** having an internal chamber **138** contained therein, as illustrated in **FIG. 10**. In this regard, the main body **122** can be constructed using a mold or extrusion process as a single part. The living hinges **132, 134, 136** are thinned sections between the first and second end sections **124,126** and the intermediate sections **128, 130** that allow bending.

In addition to the main body 122 being a single part, the fiber optic module housing **120** of **FIGS. 9 and 10** also provides for front and real panels **140, 142** to be provided in the single part separated from the main body **122** from living hinges **144, 146,** respectively. In this manner, no sides or parts of the fiber optic module housing **120** need be provided as separate parts; the fiber optic module housing **120** can be manufactured as a single part. In this regard, the fiber optic module housing **120** is provided and shown as being oriented with its latitudinal axis **A₃** in the horizontal or y-axis direction. The front panel **140** contains one or more fiber optic component openings **148** configured to receive one or more fiber optic components (not shown) for establishing fiber optic connections with one or more fiber optic components (not shown) disposed in one or more fiber optic component openings **150** disposed in the rear panel **142**. Similar to the fiber optic module housing **30** in **FIGS. 2-4** and the description provided therein, fiber optic connections can be established with fiber optic components disposed in the front and rear panels **140, 142** via cable harnesses or other fiber optic components and/or cables placed inside the internal chamber **138**. A cable harness may be connectorized on each of the front and rear panels **140, 142** with fiber optic connectors that connect to fiber optic adapters disposed in the front and rear panels **140, 142** as an example.

The fiber optic module housing **120** in **FIGS. 9 and 10** also contains one or more locking mechanisms **152** that allow the components of the fiber optic module housing **120**, namely the first and second end sections **124, 126,** the intermediate sections **128, 130,** and the front and rear panels **140, 142,** to be secured after folding so that they stay folded in place to provide an assembled fiber optic module housing **120**, as illustrated in **FIG. 10**. As illustrated in **FIG. 9**, the locking mechanisms **152** are provided in the form of latches **154** and latch receivers **160**. Two latches **154A, 154B** are disposed on the front panel **140** like provided in the front panel **36** of the fiber optic module housing **30** in **FIGS. 2-4**. One latch **154A** is disposed on a left section **157** of the front panel **140** and a second latch **154B** is disposed on a right section **158** of the front panel **140**. However, any number of latches can be provided. Each latch **154A, 154B** is configured to be received into a corresponding latch receiver **160A, 160B** disposed of portions **161** on the intermediate section **128** and second end section **126**, respectively. The latches **154A, 154B** are biased towards the main body **122**. When the front panel **140** is closed against or substantially against the main body **122**, latch fingers **162A, 162B** move into the internal chamber **138** adjacent to the intermediate section **128** and second end section **126**, respectively, wherein latch ends **164A, 164B** disposed on the ends of the latch fingers **162A, 162B** move inside and engage into their respective latch receivers **160A, 160B**. This is illustrated in **FIG. 10**. Because the latch ends **164A, 164B** are biased toward the main body **122**, the latch ends **164A, 164B** remain secured inside the latch receivers **160A, 160B** until released.

To open the front panel **140** after being latched, the latch fingers **162A, 162B,** are released from the latch receivers **160A, 160B** by pushing the latch fingers **162A, 162B** disposed in the latch receivers **160A, 160B** in towards the internal chamber **138,** thus moving the latch ends **164A, 164B** outside of the latch receivers **160A, 160B**. Thereafter, the front panel **140** will then be free to be opened about the living hinge **144** from the main body **122** for access. After access, the front panel **140** can then again be closed or substantially closed against the main body **122** and secured to the main body **122** via the locking mechanisms **152A, 152B**. Note that a reverse latching system could also be employed wherein the latch receivers **160** were disposed in the front panel **140** and the latches **154** were disposed in the portion **161** of the main body **122**. In this alternative, the latches **154** would remain fixed on the main body **122** while the latch receivers **160** move along with the movement of the front panel **140** about the living hinge **144**. The rear panel **142** also contains latches **154C, 154D** that are configured to engage with latch receivers **160C, 160D** like that of the latches **154A, 154B** and latch receivers **160A, 160B.** Thus, the discussion and operation of the latches **154A, 154B** and latch receivers **160A, 160B** are applicable for the latches **154C, 154D** and latch receivers **160C, 160D** and will not be repeated herein.

The main body **122** also contains a locking mechanism **152** to assemble the main body **122** to form the internal chamber **138**. The main body **122** may be assembled first before the front panel **140** is secure to the main body **122**. As illustrated in **FIG. 9**, the first end section **124** contains a latch **154E** that is configured to engage with a latch receiver **160E** after the first and second section ends **124, 126** and intermediate sections **128, 130** are folded about each other to form the main body **122** with the internal chamber **138** contain therein. The latch **154E** and latch receiver **160E** work like latches **154A, 154B** and latch receivers **160A, 160B** disposed in the front panel **140** and the main body **122**. Thus, the discussion and operation of the latches **154A, 154B** and the latch receivers **160A, 160B** are equally applicable for latch **154E** and latch receiver **160E**, and will not be repeated herein.

After the fiber optic module housing **120** in **FIG. 9** is fully assembled, the fiber optic module housing **120** appears as illustrated in **FIG. 10**. The fiber optic module housing **120** can then be installed, if desired, into a fiber optic equipment housing, such as a chassis. The front panel **140** includes mounting orifices **162A, 162B** that are configured to receive fasteners (not shown) for attaching the fiber optic module housing **120** to a chassis. Also, grommets (not shown) could be disposed in either or both of the mounting orifices **162A, 162B** and configured to receive fasteners (not shown) to secure the fiber optic module housing **120** to a chassis. If access to the internal chamber **138** is needed, either the latch **154E** can be released to open the main body **122,** or latches **154A, 154B** and/or **154C, 154D** can be released to open the front and rear panels **140, 142**, respectively. Further, the front panel **140** can be opened by releasing latches **154A, 154B** from latch receivers **160A, 160B**. Similarly, the rear panel **142** can be opened by releasing latches **154C, 154D** from latch receivers **160C, 160D**. In each case, a living hinge allows a component of the fiber optic module housing **120** to be retracted and bent, or opened or closed, from the other components for access. The fiber optic module housing **120** could also be completely disassembled and reassembled at any time, if desired. Complete disassembly such that the fiber optic module housing **120** lays flat in its single part may be desired for ease in cleaning.

Fiber optic module housings and modules that are discussed herein encompass any type of fiber optic module and of any size or orientation. The fiber optic module housings disclosed herein can support any type of fiber optic components. Fiber optic components can include adapters or connectors of any connection type, including but not limited to LC, SC, ST, LCAPC, SCAPC, MTRJ, and FC fiber optic connection types. Any type of hinge may be disposed between adjacent sections or panels of the fiber optic module housing. Providing a living hinge allows certain components to be manufactured as one part. The components or parts of the fiber optic module housing can be of any type or material. If incorporating a living hinge, the material used is one that allows for a living hinge to be created into a part. An injection or extrusion molding processes can be employed to construct the fiber optic module housings, which are then assembled during manufacture. The fiber optic module housing may support fiber optic adapters, connectors, or any other type of fiber optic component or optical fiber components. Many modifications and other embodiments of the invention set forth herein will come to mind to one skilled in the art to which the invention pertains having the benefit of the teachings presented in the foregoing descriptions and the associated drawings. These modifications include, but are not limited to, the type of chassis, the configuration of the fiber optic module housing, the type of fiber optic connectors and/or adapters provided in the fiber optic module housing and a cable harness contained therein.

Therefore, it is to be understood that the invention is not to be limited to the specific embodiments disclosed. It is intended that the present invention covers the modifications and variations of this invention which is only limited by appended claims. Although specific terms are employed herein, they are used in a generic and descriptive sense only and not for purposes of limitation.

## Claims

1. A fiber optic module housing (80), comprising:
a main body (84) having a base side (104), top and bottom sides (106, 108) and a rear panel (85), the main body (84) defining an internal chamber (94) therein configured to support one or more fiber optic components, the rear panel (85) having fiber optic component openings (100);
a front panel (98) having one or more fiber optic component openings (96);
**characterized in that**
a living hinge (32) is disposed between the base side (104) of the main body (84) and the front panel (98), wherein the front panel (98) is configured to open from and close against or substantially against a front side of the main body (84) about the living hinge (32),
a living hinge (86) is disposed between the bottom side (108) of the main body (84) and the rear panel (85), wherein the rear panel (85) is configured to open from and close against or substantially against a rear side of the main body (84) about the living hinge (86), wherein the living hinge (86) that is disposed between the bottom side (108) of the main body (84) and the rear panel (85) is formed from an injection molding operation that creates the main body (84), the rear panel (85) and said living hinge (86) at one time as a single part,
the rear panel (85) being non planar comprises panel sections (90A-90C) providing non coplanar surfaces with living hinges (88A, 88B) disposed in the rear panel (85) that allow the panel sections (90A-90C) to bend with respect to each other about the living hinges (88A, 88B),
wherein the base side (104) and the top and bottom sides (106, 108) of main body (84) are also formed from the injection molding operation as part of the single part with the rear panel (85) and the living hinge (86).

2. The fiber optic module housing of claim 1, wherein the living hinges (32, 86, 88A, 88B) are made from a resin compound.

3. The fiber optic module housing of claim 2, wherein the resin compound is a compound comprised from the group consisting of a Polyethylene, a Polypropylene, Valox, and nylon.

4. The fiber optic module housing of claims 1, further comprising one or more locking mechanisms (50A, 50B, 112) disposed between the panels (98, 85) and a portions of the main body (84) to secure the panels (98, 85) against or substantially against the main body (84).

5. The fiber optic module housing of claim 4, wherein each of the one or more locking mechanisms (50A, 50B, 112) further comprises one or more locking mechanism releases.

6. The fiber optic module housing of claim 1, wherein the living hinges (32, 86, 88A, 88B) are disposed in either a longitudinal axis or a latitudinal axis of the main body (84).

## Patentansprüche

1. Gehäuse für ein faseroptisches Modul (80), das umfasst:
einen Hauptkörper (84), der eine Basisseite (104), eine obere und eine untere Seite (106, 108) und ein hinteres Panel (85) aufweist, wobei der Hauptkörper (84) eine darin befindliche Innenkammer (94) begrenzt, die so ausgeführt ist, dass sie eine oder mehrere faseroptische Komponenten hält, wobei das hintere Panel (85) Öffnungen (100) für faseroptische Komponenten aufweist;
ein vorderes Panel (98), die eine oder mehrere Öffnungen (96) für faseroptische Komponenten aufweist;
**dadurch gekennzeichnet, dass**
ein Filmscharnier (32) zwischen der Basisseite (104) des Hauptkörpers (84) und dem vorderen Panel (98) angeordnet ist, wobei das vordere Panel (98) so ausgeführt ist, dass es sich um das Filmscharnier (32) herum von einer vorderen Seite des Hauptkörpers (84) weg öffnet und sich auf diese zu oder im Wesentlichen auf diese zu schließt,
ein Filmscharnier (86) zwischen der unteren Seite (108) des Hauptkörpers (84) und dem hinteren Panel (85) angeordnet ist, wobei das hintere Panel (85) so ausgeführt ist, dass es sich um das Filmscharnier (86) herum von einer hinteren Seite des Hauptkörpers (84) weg öffnet und sich auf diese zu oder im Wesentlichen auf diese zu schließt, wobei das Filmscharnier (86), das zwischen der unteren Seite (108) des Hauptkörpers (84) und dem hinteren Panel (85) angeordnet ist, durch einen Spritzgießvorgang ausgebildet wird, bei dem der Hauptkörper (84), das hintere Panel (85) und das Filmscharnier (86) gleichzeitig als einteiliges Teil hergestellt werden,
das hintere Panel (85), das nicht planar ist, Panelabschnitte (90A-90C) umfasst, die nicht-koplanare Flächen mit Filmscharnieren (88A, 88B) bereitstellen, die in dem hinteren Panel (85) angeordnet sind, wodurch ermöglicht wird, dass die Panelabschnitte (90A-90C) relativ zueinander um die Filmscharniere (88A, 88B) herum abgeknickt werden,
wobei die Basisseite (104) und die obere und die untere Seite (106, 108) des Hauptkörpers (84) ebenfalls durch einen Spritzgießvorgang als Teil des einteiligen Teils mit dem hinteren Panel (85) und dem Filmscharnier (86) hergestellt werden.

2. Gehäuse für ein faseroptisches Modul nach Anspruch 1, wobei die Filmscharniere (32, 86, 88A, 88B) aus einer Harzmasse gefertigt sind.

3. Gehäuse für ein faseroptisches Modul nach Anspruch 2, wobei die Harzmasse eine Masse ist, die aus der Gruppe bestehend aus einem Polyethylen, einem Polypropylen, Valox und Nylon gebildet ist.

4. Gehäuse für ein faseroptisches Modul nach Anspruch 1, das ferner einen oder mehrere Verriegelungsmechanismen (50A, 50B, 112) umfasst, die zwischen den Panelen (98, 85) und einem Teil des Hauptkörpers (84) angeordnet sind, um die Panele (98, 85) gegen oder im Wesentlichen gegen den Hauptkörper (84) zu sichern.

5. Gehäuse für ein faseroptisches Modul nach Anspruch 4, wobei jeder des einen oder der mehreren Verriegelungsmechanismen (50A, 50B, 112) ferner einen oder mehrere Verriegelungsmechanismus-Entriegelungen umfasst.

6. Gehäuse für ein faseroptisches Modul nach Anspruch 1, wobei die Filmscharniere (32, 86, 88A, 88B) entweder entlang einer Längsachse oder einer Breitenachse des Hauptkörpers (84) angeordnet sind.

## Revendications

1. Boitier de module à fibre optique (80) comprenant :
un corps principal (84) ayant un côté de base (104), des côtés supérieur et inférieur (106, 108) et un panneau arrière (85), le corps principal (84) définissant une chambre interne (94) s'y trouvant, configurée pour supporter un ou plusieurs composants à fibre optique, le panneau arrière (85) comportant des ouvertures de composant à fibre optique (100) ;
un panneau avant (98) comportant une ou plusieurs ouvertures de composant à fibre optique (96) ;
**caractérisé en ce que**
une charnière souple (32) est disposée entre le côté de base (104) du corps principal (84) et le panneau avant (98), où le panneau avant (98) est configuré pour s'ouvrir depuis et se fermer contre, ou sensiblement contre, un côté avant du corps principal (84) autour de la charnière souple (32),
une charnière souple (86) est disposée entre le côté inférieur (108) du corps principal (84) et le panneau arrière (85), où le panneau arrière (85) est configuré pour s'ouvrir depuis et se fermer contre, ou sensiblement contre, un côté arrière du corps principal (84) autour de la charnière souple (86), où la charnière souple (86) qui est disposée entre le côté inférieur (108) du corps principal (84) et le panneau arrière (85) est formée à partir d'une opération de moulage par injection qui crée le corps principal (84), le panneau arrière (85) et ladite charnière souple (86) en une seule fois et d'un seul tenant,
le panneau arrière (85) étant non plan comprend des sections de panneaux (90A-90C) offrant des surfaces non coplanaires avec les charnières souples (88A, 88B) disposées dans le panneau arrière (85) qui permettent aux sections de panneaux (90A-90C) de se plier les unes par rapport aux autres autour des charnières souples (88A, 88B),
où le côté de base (104) et les côtés supérieur et inférieur (106, 108) du corps principal (84) sont également formés à partir d'une opération de moulage par injection en tant que partie constituante de la pièce unique constituée avec le panneau arrière (85) et la charnière souple (86).

2. Boîtier de module à fibre optique selon la revendication 1, dans lequel les charnières souples (32, 86, 88A, 88B) sont fabriquées d'un composé de résine.

3. Boîtier de module à fibre optique selon la revendication 2, dans lequel le composé de résine est un composé contenu dans le groupe constitué d'un polyéthylène, d'un polypropylène, de Valox et de nylon.

4. Boîtier de module à fibre optique selon la revendication 1, comprenant en outre un ou plusieurs mécanismes de verrouillage (50A, 50B, 112) disposés entre les panneaux (98, 85) et une partie du corps principal (84) pour fixer les panneaux (98, 85) contre, ou sensiblement contre, le corps principal (84).

5. Boîtier de module à fibre optique selon la revendication 4, dans lequel chacun des un ou plusieurs mécanismes de verrouillage (50A, 50B, 112) comprend en outre un ou plusieurs dispositifs de dégagement des mécanismes de verrouillage.

6. Boîtier de module à fibre optique selon la revendication 1, dans lequel les charnières souples (32, 86, 88A, 88B) sont disposées soit dans un axe longitudinal, soit dans un axe latitudinal du corps principal (84).
